# EUROPEAN PATENT SPECIFICATION

(11) **EP 0 539 193 B1**
(45) Date of publication and mention of the grant of the patent: **10.07.1996**
(21) Application number: 92309643.2
(22) Date of filing: 21.10.1992
(51) Int. Cl.: B24B 5/22, G02B 6/38

(54) **Method of ceramic ferrule outer diameter processing**
Bearbeitungsmethode von Aussendurchmesser einer keramischen Hülse
Méthode de traitement de diamètre extérieur d'un embout en céramique

(30) Priority: 23.10.1991 JP 304108/91
(43) Date of publication of application: 28.04.1993
(73) Proprietor: JAPAN ENERGY CORPORATION, Minato-ku, Tokyo (JP)
(72) Inventor: Maeda, Isao, c/o Nippon Mining Co. Ltd., Tokyo (JP); Niiho, Shinji, c/o Takaho K.K., Hachioji-shi, Tokyo (JP)
(74) Representative: Harvey, David Gareth

(56) References cited:
- PATENT ABSTRACTS OF JAPAN vol. 9, no. 162 (M-394)6 July 1985 & JP-A-60 034 257 (KIYOSHI HAJIKANO)
- PATENT ABSTRACTS OF JAPAN vol. 12, no. 100 (P-683)2 April 1988 & JP-A-62 231 910 (KIYOSHI HAJIKANO)
- PATENT ABSTRACTS OF JAPAN vol. 12, no. 100 (P-683)2 April 1988 & JP-A-62 231 909 (KIYOSHI HAJIKANO)

## Description

This invention relates generally to precision ferrules for optical connectors used for connecting optical fibers and, more particularly, to a method of ceramic ferrule outer periphery processing, i.e., processing ceramic ferrules to obtain high precision outer periphery, i.e., satisfactory concentricity, outer periphery accuracy, circularity, cylindricity and surface roughness.

In recent years, ceramic ferrules are used popularly as precision ferrules for optical connectors. An optical fiber can be centered by merely inserting the optical fiber through a very small bore of the ceramic ferrule. In the manufacture of a ferrule, therefore, high precision outer periphery processing is required in addition to bore lap machining (i.e., boring and polishing) with very high precision.

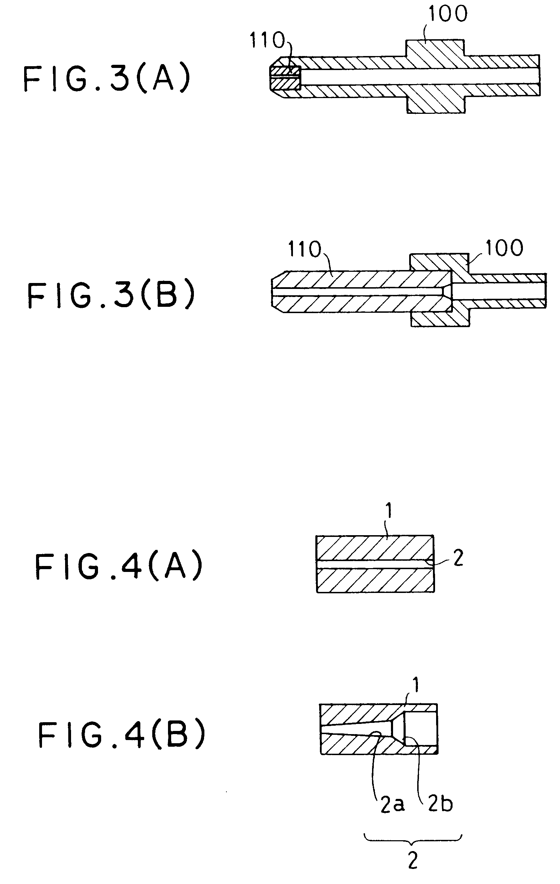

Among the precision ferrules are a capillary ferrule as shown in Fig. 3(A), which has a ceramic ferrule 110 provided in an end of a stainless steel casing 100, and an integral ceramic ferrule as shown in Fig. 3(B), which substantially entirely comprises a ceramic ferrule 110 provided at one end with a stainless steel casing 100.

Among raw materials (i.e.,blanks) which are used to produce the above ceramic ferrules 110 are an extrusion-molded blank 1 as shown in Fig. 4(A), which is formed by extrusion molding and has a central bore 2 having a substantially constant diameter, and an injection-molded blank 1 as shown in Fig. 4(B), which is formed by injection molding and has a tapered central bore 2a. The bore is polished by wire lapping machine. With extrusion-molded blanks, bore polishing is done with a plurality of blanks at a time by utilizing a lapping wire.

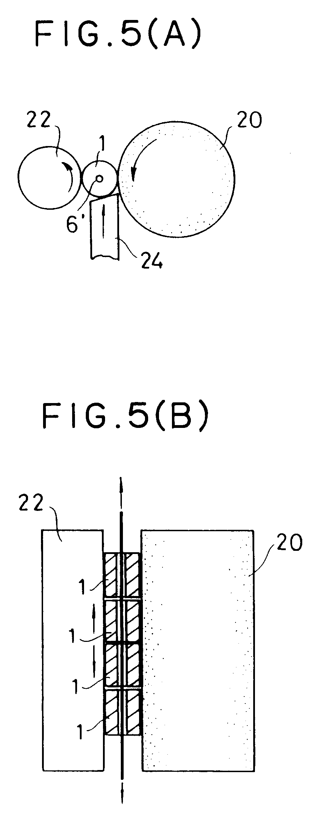

Blanks 1 after completion of the bore lap processing are outer periphery processed with a center-less grinder, as shown in Figs. 5(A) and 5(B). In this process, the blanks are finished to obtain the circularity, outer periphery accuracy and cylindricity as well as concentricity within predetermined allowances.

The center-less grinder has a grindstone 20 and a rubber roller 22 disposed at a predetermined distance from the grindstone 20. A plurality of blanks 1, through which a centering wire 6′ is passed, are forcibly brought by a holder 24 to a position between the grindstone 20 and the rubber roller 22 and are outer periphery processed. At this time, the centering wire 6′ is reciprocated in the axial direction of the blanks 1, that is, it is reciprocated with the blanks in the axial direction thereof, i.e., in the direction parallel to the axis of the grindstone 20.

In this way, the outer periphery processing is performed in, for instance, three stages, i.e., rough processing, intermediate processing and finish processing, by using grindstones of different grain sizes, thus obtaining the concentricity, circularity, outer periphery accuracy and cylindricity of the blank within predetermined allowances.

According to the results of researches and investigations conducted by the inventors, however, the method of ceramic ferrule outer periphery processing using the centering wire 6′, although having an advantage that a large quantity of blanks can be processed at a time, is found to have a problem. In this method, a plurality of blanks, through which the wire 6′ is passed as shown in Fig. 5(b), are automatically centered. However, there is a gap between the central bore 2 of each blank 1 and the diameter of the wire 6′. Therefore, it is extremely difficult to obtain a predetermined concentricity stably of all the blanks with the wire 6′ passed therethrough.

In the capillary ferrule 3(A), the concentricity of the outer periphery of the ferrule with respect to the bore is obtained by outer periphery processing the stainless steel casing 100 after pressure fitting the ceramic ferrule 110 in the stainless steel casing 100. Therefore, although the ceramic ferrule requires high dimensional precision for its bore formation, the concentricity of the ceramic ferrule in the outer periphery processing thereof need not be so high. The blank obtainable by the outer periphery processing as shown in Figs. 5(A) and 5(B) can be suitably utilized for such capillary ferrule.

In the integral ceramic ferrule as shown in Fig. 3(B), however, highly stable concentricity is required for the ceramic ferrule itself. Therefore, the above method of outer periphery processing results in a very inferior yield.

JP 62-231909 describes a technique for improving the concentricity of a ceramic ferrule formed by a centerless grinder. In this technique a thin tube is used as the centering wire and a resin is used to pack the space between the thin tube and the bore of the ferrule blank.

To solve the above problems, it has been the practice to carry out the outer periphery processing on a ceramic ferrule by using a cylindrical grinder. In this case, satisfactory concentricity can be obtained. However, up to date there is a trend for obtaining the outer periphery accuracy and cylindricity as well. Therefore, the productivity is inferior, and difficulties are involved in the maintenance of grindstones and the like. This method, therefore, is impractical.

An object of the invention is to provide a method of ceramic ferrule outer periphery processing, which permits obtaining sufficient stable concentricity for an integral ceramic ferrule use as well as obtaining satisfactory outer periphery accuracy, circularity, cylindricity and surface roughness and is also satisfactory in the operation control property.

To attain the above object of the invention, there is provided a method of ceramic ferrule outer periphery processing, which comprises the steps of a primary outer periphery machining process for removing curved portions and tapers of the outer periphery of the ceramic blank, a secondary outer periphery machining process carried out subsequent to a bore lapping process on the ceramic blank in order to obtain concentricity, a tertiary and a finish outer periphery machining process for improving the surface roughness and obtaining a final outer periphery diameter, the primary, tertiary and finish outer perihpery machining processes being each carried out with a center-less grinder, the secondary outer periphery machining process being carried out with a center-type cylindrical grinder.

The invention will now be described in more detail by way of example with reference to the accompanying drawings in which:
Figs. 1(A) and1(B) are schematic views showing a center-less grinder for carrying out ceramic ferrule outer periphery machining processes according to the invention;
Fig. 2 is a schematic view showing a center-type cylindrical grinder for carrying out a ceramic ferrule outer pehiphery process according to the invention;
Figs. 3(A) and 3(B)are sectional views showing precision ferrules;
Figs. 4(A)and 4(B) are sectional views showing ceramic blanks; and
Figs. 5(A) and 5(B) are views for a prior art ceramic blank outer periphery machining process.

Now, an embodiment of the method of ceramic ferrule outer periphery processing according to the invention will be described. This embodiment concerns the use of injection-molded blanks to manufacture ceramic ferrules 110 for the integral ceramic ferrule as shown in Fig. 3(B).

According to the invention, the outer periphery processing of the blank at least comprises:
(1) a primary outer periphery machining process carried out for removing curved portions and tapers on the outer periphery of the blank after removal of burrs produced at the rear end of the blank at the time of injection molding,
(2) a secondary outer periphery machining process carried out for obtaining concentricity after a bore lapping process on the blank, and
(3) a tertiary and a finish machining process carried out for improving the surface roughness and obtaining a final outer periphery diameter.

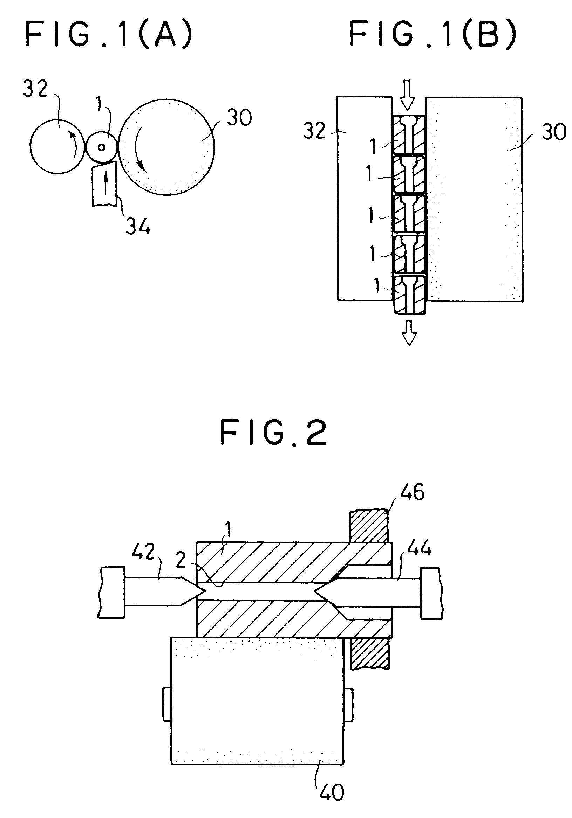

The primary, tertiary and finish outer periphery machining processes are carried out using a center-less grinder as shown in Figs. 1(A) and 1(B), and the secondary outer periphery machining process is carried out using a cylindrical grinder as shown in Fig. 2.

More specifically, the center-less grinder that is used, as shown in Figs. 1(A) and 1(B), comprises a grindstone 30 of a predetermined grain size and a rubber roller 32 disposed at a predetermined distance from the grindstone 30. A plurality of blanks 1 held by a holder 34 are inserted continuously into the space between the grindstone 30 and rubber roller 32 from one side toward the other side of the grindstone 30. That is, unlike the prior art method, in which individual blanks are reciprocated along the grindstone surface by the centering wire passed through them, according to the invention the individual blanks 1 are pushed to proceed in the axial direction of the grindstone 30 from one side thereof toward the other side, whereby the outer periphery processing is effected. When each blank is released form the pressures of the grindstone 30 and rubber roller 32, an outer periphery processing is completed.

According to the invention, a primary outer periphery machining process, a tertiary outer periphery machining process and a finish outer periphery machining process are carried out using such a center-less grinder. In these individual processes, however, grindstones having different grain sizes are used as the grindstone 30. For example, #600, #2000 and #5000 grindstones are used for the respective primary, tertiary and finish outer periphery machining processes. If necessary, it is possible to provide between the tertiary and finish outer periphery machining processes an additional outer periphery machining process using a #3000 grindstone, for instance.

According to the invention, a secondary outer periphery machining process is carried for obtaining concentricity after the bore lapping process on the blank having been primarily ground. This process is carried out using the cylindrical grinder as shown in Fig. 2, as noted before.

As shown in Fig. 2, the blank 1 is held rotatably at its opposite ends by respective center pieces 42 and 44 of the cylindrical grinder. In this state, it is rotated by a chuck 46 which is mounted on one end, i.e., right end in this embodiment, of the blank 1. At this time, the blank 1 is pushed against, for instance, a #600 grindstone for outer periphery processing. As a result, a predetermined concentricity between the central bore 2 and outer periphery can be obtained. The outer periphery processing using the cylindrical grinder is done for the sole purpose of obtaining the concentricity within a predetermined allowance.

After the predetermined concentricity has been obtained, a portion of the blank 1 which was held by the chuck 46 is cut away, and then the tertiary grinding is carried out.

By the above outer periphery processing on the blank according to the invention, the concentricity, outer diameter accuracy, circularity, cylindricity and surface roughness of the blank in predetermined allowances can be obtained.

Subsequently, various other necessary finish processes are carried out to obtain the ceramic ferrule 110.

The ceramic ferrule 110 thus obtained is pressure fitted in the stainless steel casing 100, thus completing the precision ferrule shown in Fig. 3(B).

While the above embodiment has concerned with the use of injection-molded blanks, the method according to the invention is suitably applicable as well to the outer periphery processing of extrusion-molded blanks.

As has been described in the foregoing, in the method of ceramic ferrule outer periphery processing according to the invention the outer periphery processing using the cylindrical grinder is used only for obtaining concentricity, and the center-less grinder is used for obtaining the outer diameter accuracy, circularity, cylindricity and surface roughness. Thus, with the method of outer periphery processing according to the invention, it is possible to obtain adequately stable concentricity for an integral ceramic ferrule use. In addition, it is possible to obtain satisfactory outer diameter accuracy, circularity, cylindricity and surface roughness. Further, a satisfactory yield of acceptable ferrules can be obtained.

## Claims

1. A method of processing the outer periphery of a ceramic ferrule, comprising the steps of:
a primary outer periphery machining process for removing curved portions and tapers from the outer periphery of said ceramic blank; a secondary outer periphery machining process carried out subsequent to a bore lapping process on said ceramic blank in order to obtain concentricity; and tertiary and finish outer periphery machining processes for improving the surface roughness and obtaining a final outer periphery diameter, the primary, tertiary and finish outer periphery machining processes each being carried out with a centerless grinder, while said secondary outer periphery machining process is carried out with a center-type cylindrical grinder.

## Patentansprüche

1. Verfahren zum Bearbeiten des äußeren Umfangs einer keramischen Hülse, das die folgenden Schritte umfaßt:
einen ersten materialabhebenden Bearbeitungsschritt des äußeren Umfangs zum Entfernen von gewölbten Abschnitten und Abschrägungen von dem äußeren Umfang des keramischen Rohlings;
einen zweiten materialabhebenden Bearbeitungsschritt des äußeren Umfangs, der nach einem Verfahren zum Läppen der Bohrung an dem keramischen Rohling durchgeführt wird, um Konzentrizität zu erhalten;
und einen dritten materialabhebenden Bearbeitungsschritt des äußeren Umfangs und Endbehandlungsschritt zum Verbessern der Oberflächenrauhigkeit und zum Erhalten eines äußeren Enddurchmessers,
wobei der erste, der dritte und der Endbehandlungsschritt der materialabhebenden Bearbeitung des äußeren Umfangs jeweils mit einem unzentrierten Schleifapparat durchgeführt werden, während der zweite materialabhebende Bearbeitungsschritt des äußeren Umfangs mit einem zylindrischen Spitzenschleifapparat durchgeführt wird.

## Revendications

1. Méthode de traitement de la périphérie externe d'un manchon en matière céramique, comprenant les étapes comportant :
un traitement d'usinage primaire de la périphérie externe pour retirer des tronçons courbes et des parties coniques de la périphérie externe de ladite ébauche en matière céramique ;
un traitement d'usinage secondaire de la périphérie externe réalisé après un traitement de rodage du trou sur ladite ébauche en matière céramique afin d'obtenir une concentricité ; et
des traitements d'usinage tertiaire et de finition de la périphérie externe pour améliorer la rugosité superficielle et pour obtenir un diamètre final de la périphérie externe, les traitements d'usinage primaire, tertiaire et de finition de la périphérie externe étant chacun réalisé par une machine à rectifier sans centre, tandis que le traitement d'usinage secondaire de la périphérie externe est réalisé avec une machine à rectifier cylindrique du type à centre.
